# EUROPEAN PATENT SPECIFICATION

(11) **EP 3 520 520 B1**
(45) Date of publication and mention of the grant of the patent: **05.08.2020**
(21) Application number: 17780534.8
(22) Date of filing: 21.09.2017
(51) Int. Cl.: H04W 72/04, H04L 5/00, H04L 5/14, H04W 76/12

(54) **MULTICARRIER OPERATION IN A COMMUNICATION NETWORK**
MEHRTRÄGERBETRIEB IN EINEM KOMMUNIKATIONSNETZ
FONCTIONNEMENT MULTIPORTEUSE DANS UN RÉSEAU DE COMMUNICATION

(30) Priority: 30.09.2016 US 201662402512 P
(43) Date of publication of application: 07.08.2019
(73) Proprietor: Telefonaktiebolaget LM Ericsson (PUBL), 164 83 Stockholm (SE)
(72) Inventor: EKLÖF, Cecilia, 187 41 Täby (SE); KWONG, Waikwok, 171 51 Solna (SE)
(74) Representative: Ericsson
(86) International application number: PCT/SE2017/050918
(87) International publication number: WO 2018/063054

(56) References cited:
- US-A1- 2012 177 089
- "3rd Generation Partnership Project; Technical Specification Group Radio Access Network; Multi-Carrier Enhancements for UMTS (Release 14)", 3GPP STANDARD; 3GPP TR 25.707, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG6, no. V14.0.0, 1 July 2016 (2016-07-01), pages 1-44, XP051295299, [retrieved on 2016-07-01]
- HUAWEI ET AL: "Discussion on RRC configuration impacts due to MC enhancements", 3GPP DRAFT; R2-165063 DISCUSSION ON RRC CONFIGURATION IMPACTS DUE TO MC ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANT , vol. RAN WG2, no. Göteborg; 20160822 - 20160826 21 August 2016 (2016-08-21), XP051126695, Retrieved from the Internet: URL:http://www.3gpp.org/ftp/Meetings_3GPP_ SYNC/RAN2/Docs/ [retrieved on 2016-08-21]
- HUAWEI ET AL: "TP on solutions for MC enhancements", 3GPP DRAFT; R2-164350 TP ON SOLUTIONS FOR MC ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, China; 20160523 - 20160527 6 June 2016 (2016-06-06), XP051112617, Retrieved from the Internet: URL:http://www.3gpp.org/ftp/tsg_ran/WG2_RL 2/TSGR2_94/Docs/ [retrieved on 2016-06-06]

## Description

### Technical Field

The technology described relates to communication networks, and in particular to a communication network in which a terminal device can be configured for uplink multicarrier operation. The disclosure specifically relates to a network node and a terminal device, methods of operating the same and computer program products for causing a computer or processor to perform the methods.

### Background

In a typical cellular radio system, radio or wireless terminals (also known as mobile stations, user equipment units (UEs) and/or terminal devices) communicate via a radio access network (RAN) to one or more core networks. The radio access network (RAN) covers a geographical area which is divided into cell areas, with each cell area being served by a base station, e.g., a radio base station (RBS), which in some networks may also be called, for example, a "Node B" (in a Universal Mobile Telecommunications System (UMTS)) or "eNodeB" (in a Long Term Evolution (LTE) system). A cell is a geographical area where radio coverage is provided by the radio base station equipment at a base station site. Each cell is identified by an identity within the local radio area, which is broadcast in the cell. The base stations communicate over the air interface operating on radio frequencies with the user equipment units (UEs) within range of the base stations.

In some radio access networks, several base stations may be connected (e.g., by landlines or microwave) to a radio network controller (RNC) or a base station controller (BSC). The radio network controller supervises and coordinates various activities of the plural base stations connected thereto. The radio network controllers are typically connected to one or more core networks.

The UMTS is a third generation mobile communication system, which evolved from the Global System for Mobile Communications (GSM). UMTS Terrestrial Radio Access (UTRA) Network (UTRAN) is essentially a radio access network using wideband code division multiple access (WCDMA) for user equipment units (UEs). The Evolved Universal Terrestrial Radio Access (E-UTRA) Network (E-UTRAN) comprises the Long Term Evolution (LTE) and System Architecture Evolution (SAE).

User data (i.e. data from a UE) is transmitted to the network in an uplink transport channel. As defined in section 4.1 of 3GPP TS 25.211 "Physical channels and mapping of transport channels" v13.0.0, transport channels are services offered by Layer 1 to the higher layers. A transport channel is defined by how and with what characteristics data is transferred over the air interface. A general classification of transport channels is into two groups: dedicated channels, using inherent addressing of UE, and common channels, using explicit addressing of UE if addressing is needed.

In High-Speed Uplink Packet Access (HSUPA) in UMTS, the uplink transport channel is the Enhanced-Dedicated Channel (E-DCH) transport channel. The Transmission Time Interval (TTI) is a parameter in UMTS that defines the duration of a transmission on the transport channel and is related to the size of the data packet. Thus, one block of data is transmitted on the transport channel for each TTI.

The Radio Resource Control (RRC) protocol is responsible for the establishment, maintenance and release of the RRC connection between the UE and UTRAN as well as the establishment, reconfiguration and release of Radio Bearers (RBs) and Signalling Radio Bearers (SRBs). The configuration of lower level parameters is also included in RRC messages. The RRC protocol is described in 3GPP TS 25.331 "Radio Resource Control (RRC); Protocol specification" v13.2.0. Currently the TTI for an Enhanced-Dedicated Channel (E-DCH) transport channel is configured when the transport channel is added.

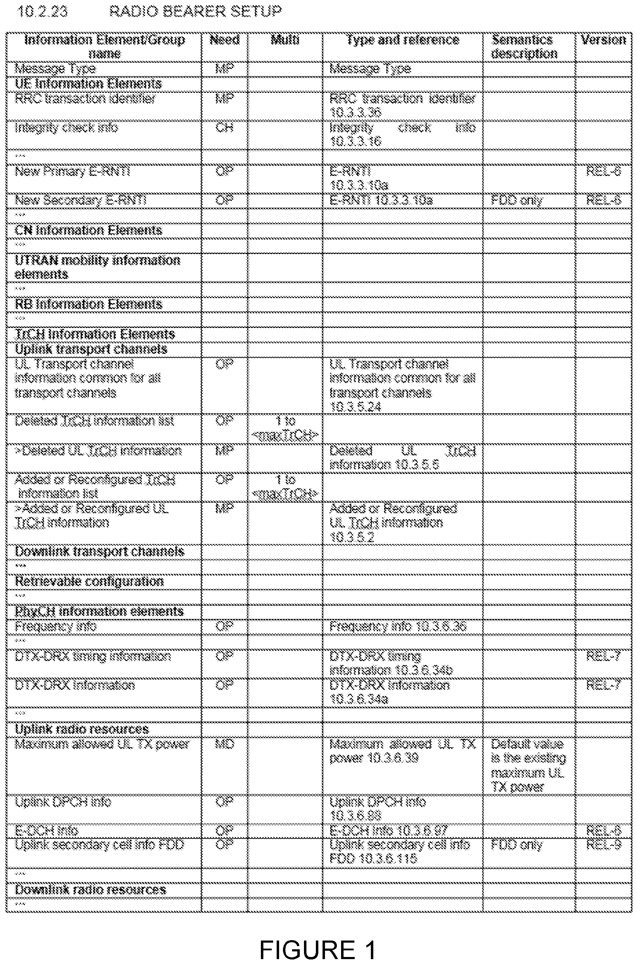

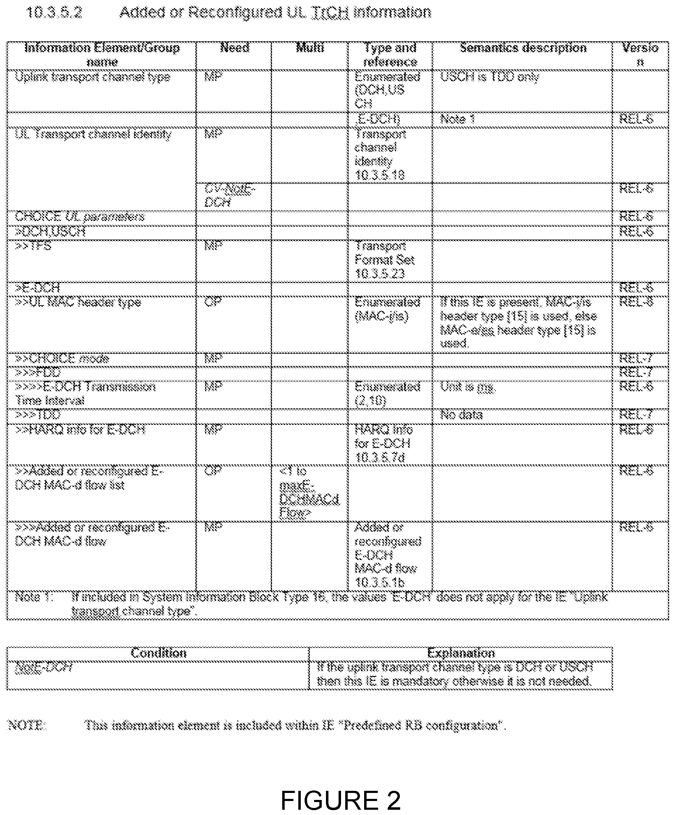

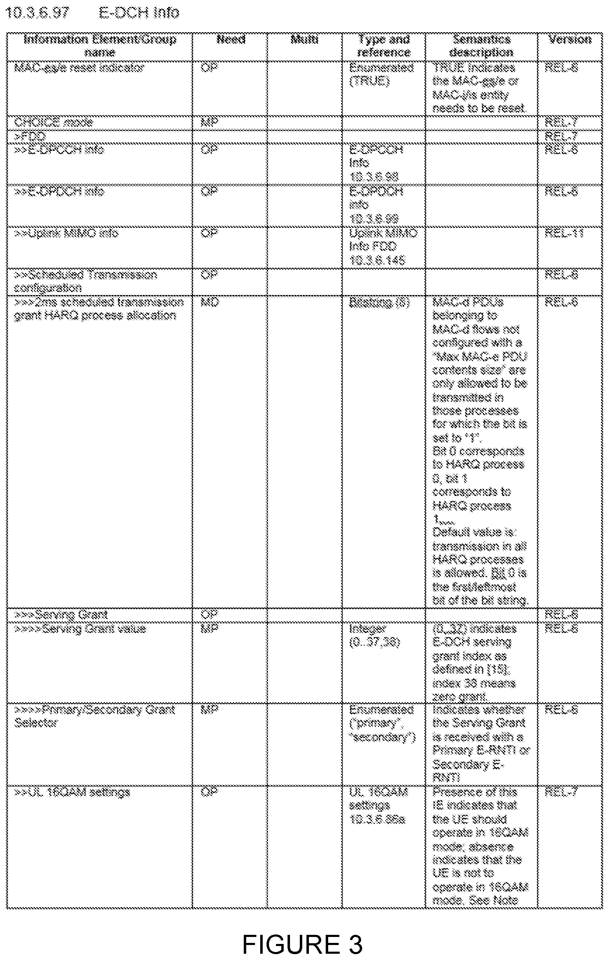

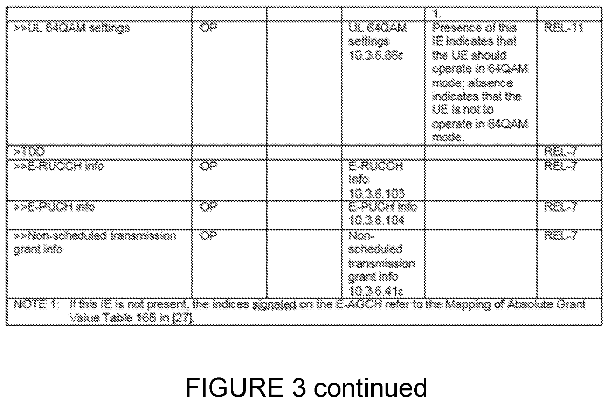

Figure 1 shows an extract from the Radio Bearer Setup message, which is an example of an RRC Reconfiguration message that can be used to perform such procedures, and which is defined in section 10.2.23 of TS 25.331 v13.2.0. It can be seen that this Radio Bearer Setup message refers to an "Added or Reconfigured TrCH information list" group of information elements (IEs) that specifies the TTI for an E-DCH. The "Added or Reconfigured TrCH information list" is defined in section 10.3.5.2 of TS 25.331 v13.2.0 and is shown in Figure 2. Further information for the E-DCH is configured in an "E-DCH info" group of lEs that is also referenced in the Radio Bearer Setup message. The "E-DCH info" is defined in section 10.3.6.97 of TS 25.331 v13.2.0 and is shown in Figure 3.

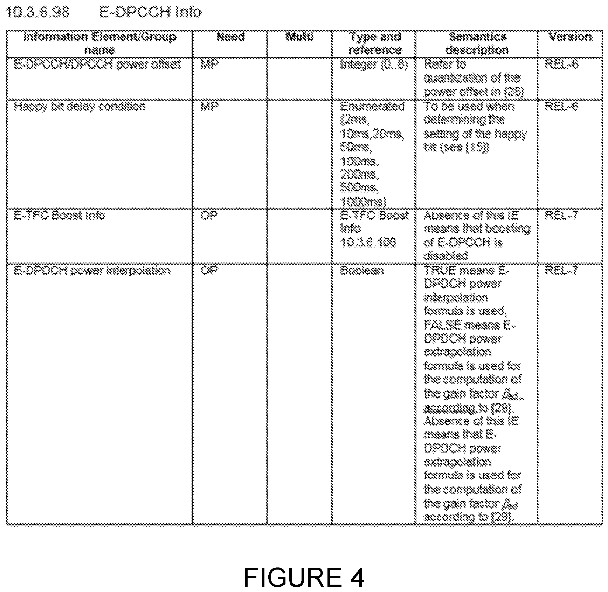

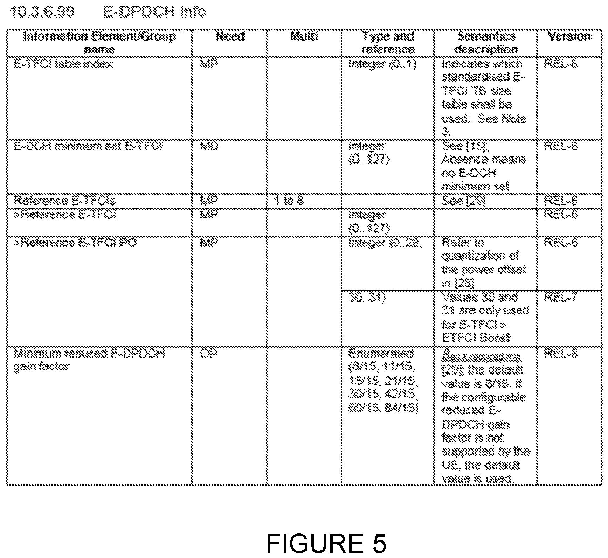

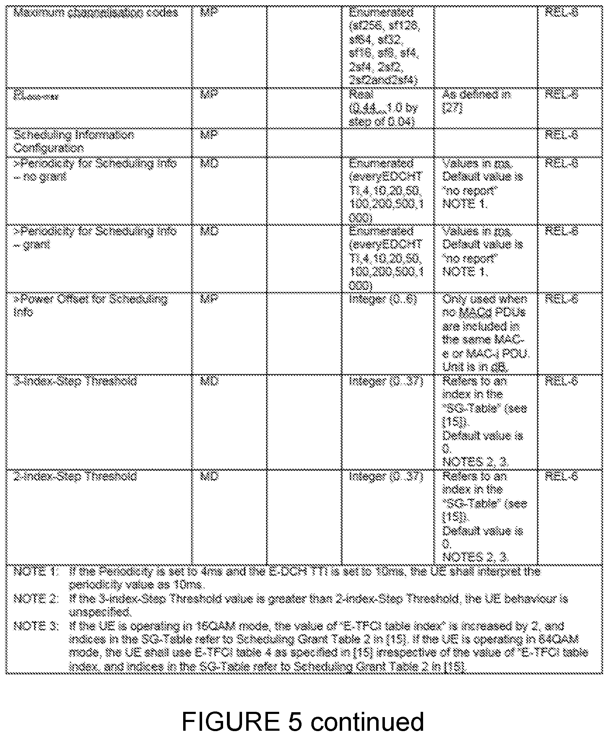

The E-DCH is mapped to two E-DCH Dedicated Physical Data Channels, the Enhanced Dedicated Physical Data Channel (E-DPDCH) which carries uplink user data and the Enhanced Dedicated Physical Control Channel (E-DPCCH) which carries control data required by the Node B. Information for the E-DPCCH is defined in an "E-DPCCH Info" group of lEs that is defined in section 10.3.6.98 of TS 25.331 v13.2.0 and is shown in Figure 4. Information for the E-DPDCH is defined in an "E-DPDCH Info" group of lEs that is defined in section 10.3.6.99 of TS 25.331 v13.2.0 and is shown in Figure 5.

Within UMTS, dual-carrier high speed uplink packet access (DC-HSUPA) allows a UE to transmit simultaneously on two uplink carriers, effectively doubling the maximum uplink throughput when the UE is experiencing good radio conditions. In DC-HSUPA, the two carriers must be configured in the same frequency band. This DC-HSUPA functionality was introduced in the Third Generation Partnership Project (3GPP) Release 9.

Dual-band dual-carrier HSUPA (DB-DC-HSUPA) was introduced in 3GPP Release 13. DB-DC-HSUPA allows the two carriers to be configured on different frequency bands. High-frequency carriers have relatively smaller coverage than low-frequency ones, and depending on the actual difference in frequency, the coverage for different bands can differ very substantially. This means that the two carriers in a dual-band scenario can have significantly different coverage.

For the secondary cell (i.e. a cell on the secondary carrier), several information elements exist. These are the "Uplink secondary cell info FDD" defined in section 10.3.6.115 of TS 25.331 v13.2.0 and shown in Figure 6, the "Secondary serving E-DCH cell info" defined in section 10.3.6.116 of TS 25.331 v13.2.0 and shown in Figure 7, and "Secondary E-DCH info common" defined in section 10.3.6.116 of TS 25.331 v13.2.0 and shown in Figure 8.

In preparation for 3GPP release 14, work is being carried out on enhancements to multicarrier for UMTS. One of the objectives is to introduce different TTI lengths for the different carriers, as described in RP-161259 of 3GPP TSG RAN Meeting #72 "MultiCarrier Enhancements for UMTS". The current standard supports only 2ms (milliseconds) + 2ms TTIs on the two carriers, but the objective is to introduce 2ms + 10ms, 10ms + 2ms and 10ms + 10ms configurations. Other prior art examples are: US2012177089 A1 (12-07-2012); 3GPP Technical Report TR 25.707 V14.0.0 (2016-06); 3GPP TSG-RAN WG2 #95 R2-165063, Source: Huawei, HiSilicon, Title: "Discussion on RRC configuration impacts due to MC enhancements"; 3GPP TSG-RAN WG2 #94 R2-164350, Source: Huawei, HiSilicon, Title: "TP on solutions for MC enhancements".

### Summary

Thus, it is an objective to introduce the possibility for one or both of the carriers to use a 10ms TTI configuration. However, the current standards assume that the E-DCH TTIs are the same for both carriers and thus there is a need for techniques for configuring a terminal device for multicarrier operation with different TTIs (not just 2ms + 2ms TTIs, but other configurations as well).

According to a first specific example, there is provided a method of operating a network node in a communication network to configure a terminal device for uplink multicarrier operation for transmissions from the terminal device to a radio access node in the communication network, the method comprising initiating the sending of a message to the terminal device to configure the terminal device to operate with a first uplink carrier having a first transmission time interval, TTI, and a second uplink carrier having a second TTI.

In an embodiment of the first specific example, the message configures the terminal device with a single transport channel for the first uplink carrier and the second uplink carrier, the single transport channel has the first TTI and the second TTI, and the message comprises an "Uplink secondary cell info FDD" information element, IE, that indicates parameters that are specific to the TTI of the second uplink carrier.

According to a second specific example, there is provided a network node for use in a communication network, the network node being for configuring a terminal device for uplink multicarrier operation for transmissions from the terminal device to a radio access node in the communication network, the network node being adapted to initiate the sending of a message to the terminal device to configure the terminal device to operate with a first uplink carrier having a first transmission time interval, TTI, and a second uplink carrier having a second TTI.

In an embodiment of the second specific example, the message configures the terminal device with a single transport channel for the first uplink carrier and the second uplink carrier, the single transport channel has the first TTI and the second TTI, and the message comprises an "Uplink secondary cell info FDD" information element, IE, that indicates parameters that are specific to the TTI of the second uplink carrier.

According to a third specific example, there is provided a method of operating a terminal device, wherein the terminal device is capable of uplink multicarrier operation with a communication network for transmissions from the terminal device to a radio network node in the communication network, the method comprising receiving a message from the communication network, the message being for configuring the terminal device to operate with a first uplink carrier having a first transmission time interval, TTI, and a second uplink carrier having a second TTI.

In an embodiment of the third specific example, the message configures the terminal device with a single transport channel for the first uplink carrier and the second uplink carrier, the single transport channel has the first TTI and the second TTI, and the message comprises an "Uplink secondary cell info FDD" information element, IE, that indicates parameters that are specific to the TTI of the second uplink carrier.

According to a fourth specific example, there is provided a terminal device, wherein the terminal device is capable of uplink multicarrier operation with a communication network for transmissions from the terminal device to a radio network node in the communication network, the terminal device being adapted to receive a message from the communication network, the message being for configuring the terminal device to operate with a first uplink carrier having a first transmission time interval, TTI, and a second uplink carrier having a second TTI.

In an embodiment of the fourth specific example, the message configures the terminal device with a single transport channel for the first uplink carrier and the second uplink carrier, the single transport channel has the first TTI and the second TTI, and the message comprises an "Uplink secondary cell info FDD" information element, IE, that indicates parameters that are specific to the TTI of the second uplink carrier.

According to a fifth specific example, there is provided a computer program product comprising a computer readable medium having computer readable code embodied therein, the computer readable code being configured such that, on execution by a suitable computer or processor, the computer or processor is caused to perform any of the methods described above.

The above examples enable the configuration of a terminal device for multicarrier operation in an efficient and clear way.

### Brief Description of the Drawings

Exemplary embodiments of the techniques introduced in this document are described below with reference to the following figures, in which:
Figure 1 shows an extract from a Radio Bearer Setup message;
Figure 2 shows an "Added or Reconfigured TrCH information list" IE;
Figure 3 shows an "E-DCH info" IE;
Figure 4 shows an "E-DPCCH Info" IE;
Figure 5 shows an "E-DPDCH Info" IE;

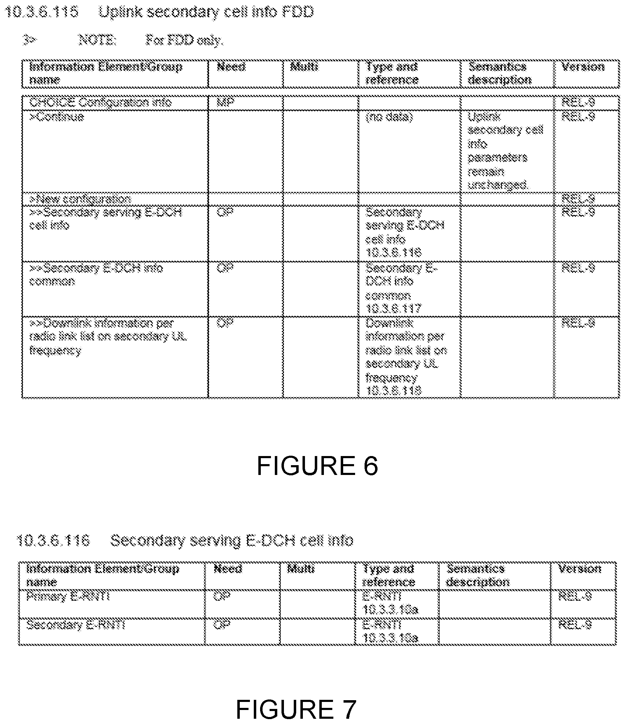

Figure 6 shows an "Uplink secondary cell info FDD" IE;
Figure 7 shows a "Secondary serving E-DCH cell info" IE;

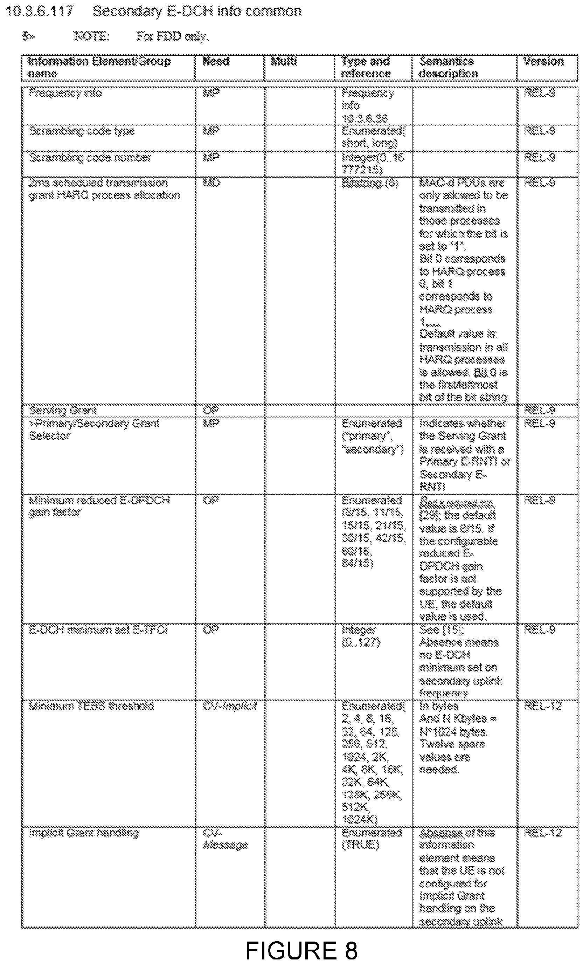

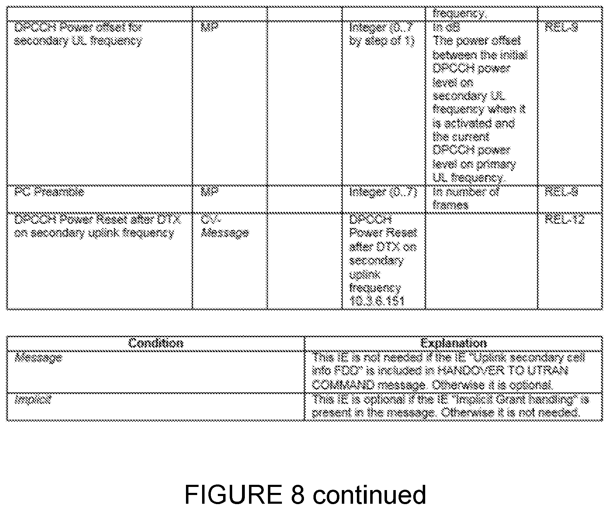

Figure 8 shows a "Secondary E-DCH info common" IE;

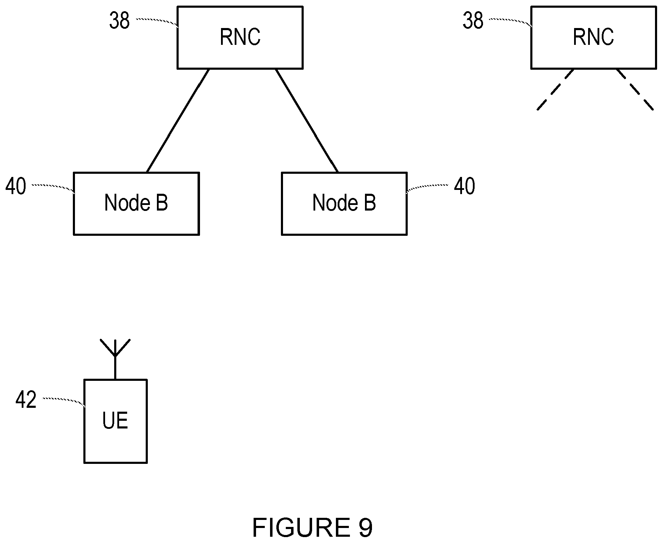

Figure 9 illustrates an exemplary UMTS network;

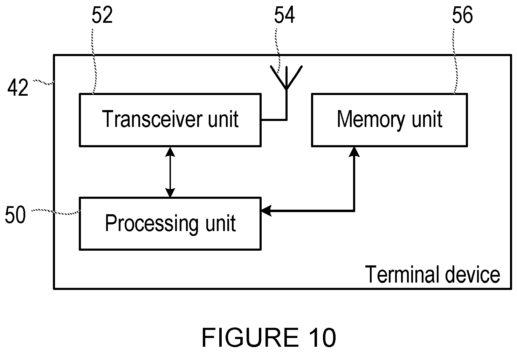

Figure 10 is a block diagram of an exemplary terminal device;

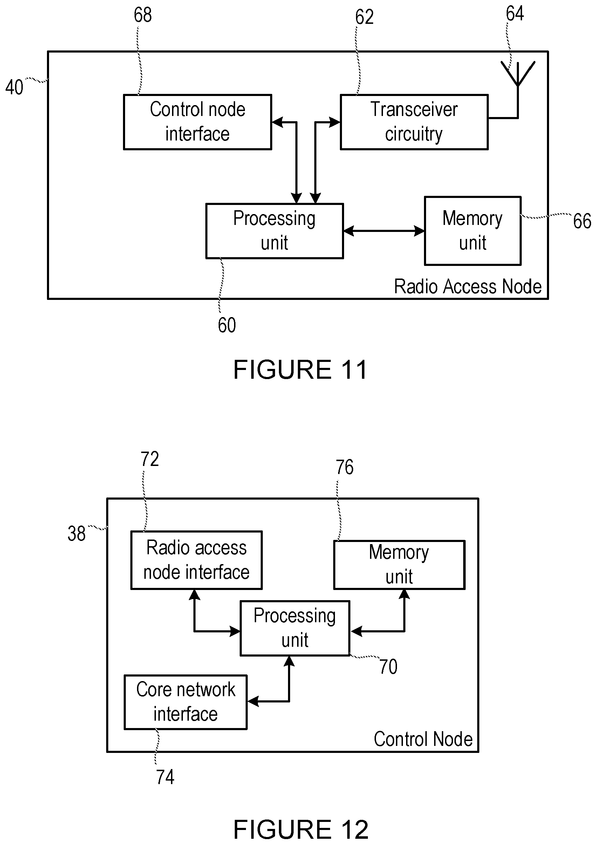

Figure 11 is a block diagram of an exemplary radio network node;
Figure 12 is a block diagram of an exemplary control node;

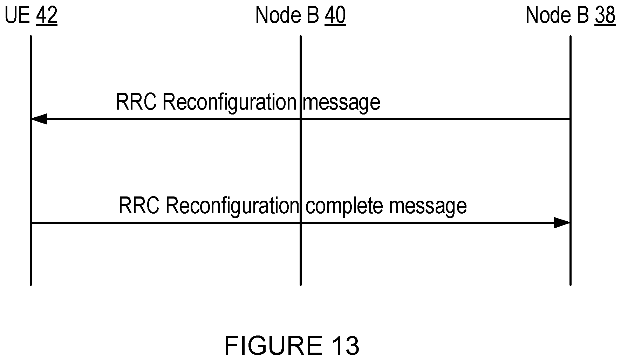

Figure 13 is a signalling diagram illustrating the signalling in an RRC Reconfiguration procedure;

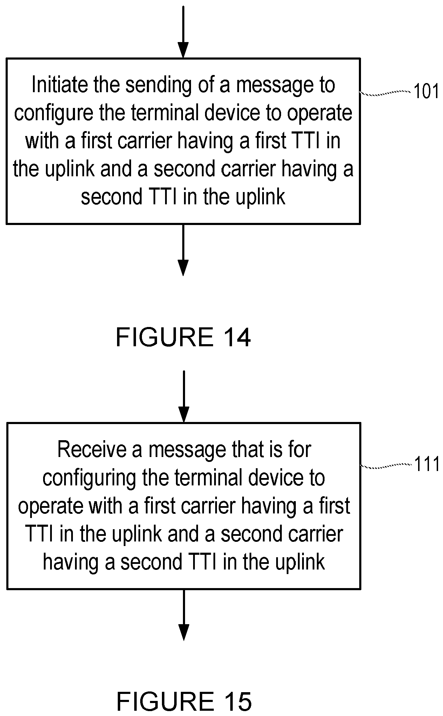

Figure 14 is a flow chart illustrating an exemplary method of operating a network node; and
Figure 15 is a flow chart illustrating an exemplary method of operating a terminal device;

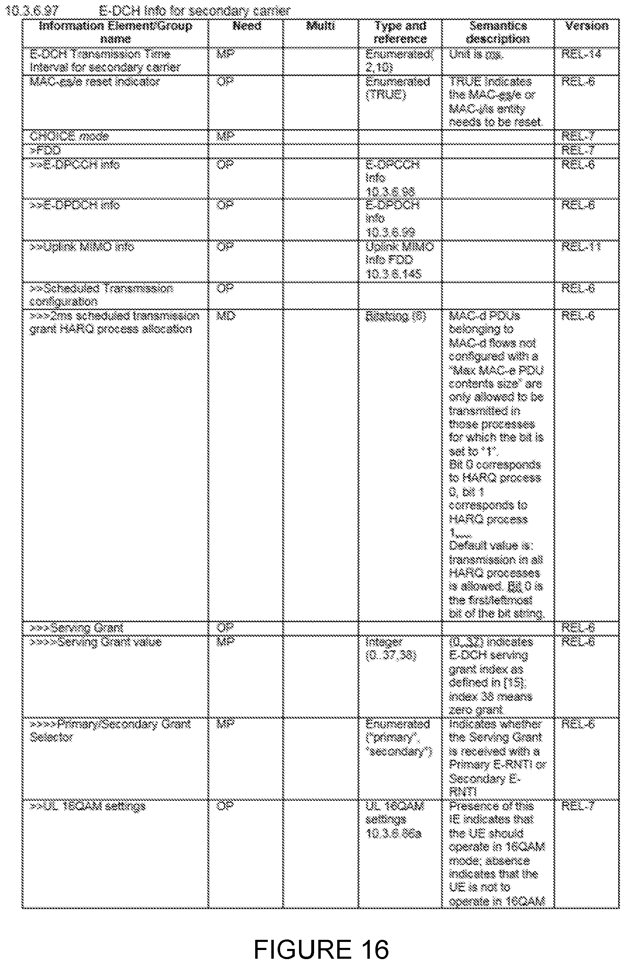

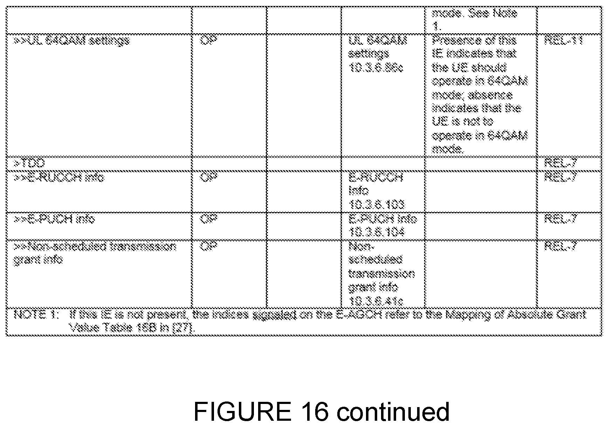

Figure 16 shows an exemplary "E-DCH Info for secondary carrier" IE;

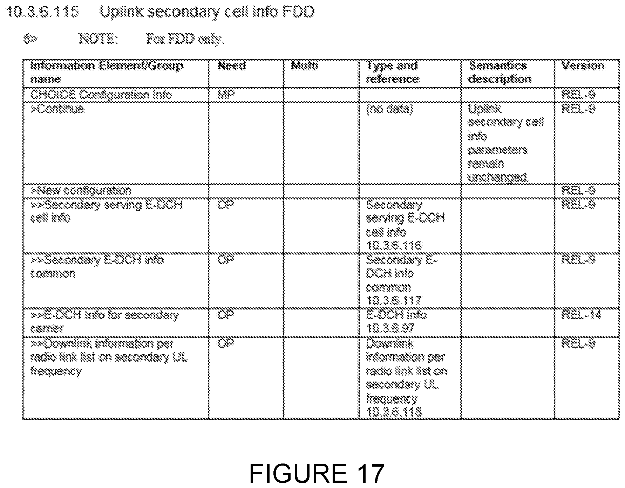

Figure 17 shows an exemplary "Uplink secondary cell info FDD" IE;

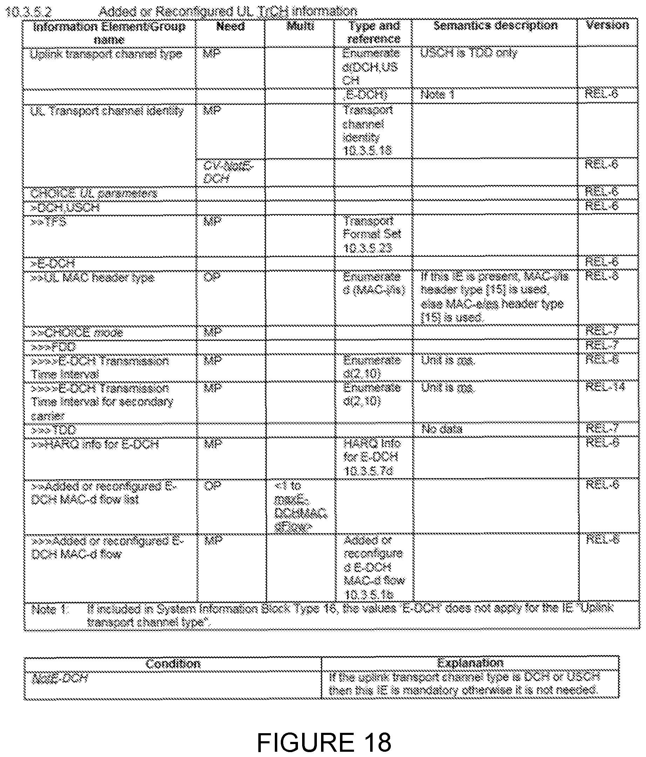

Figure 18 shows an exemplary "Added or Reconfigured UL TrCH information" IE; and

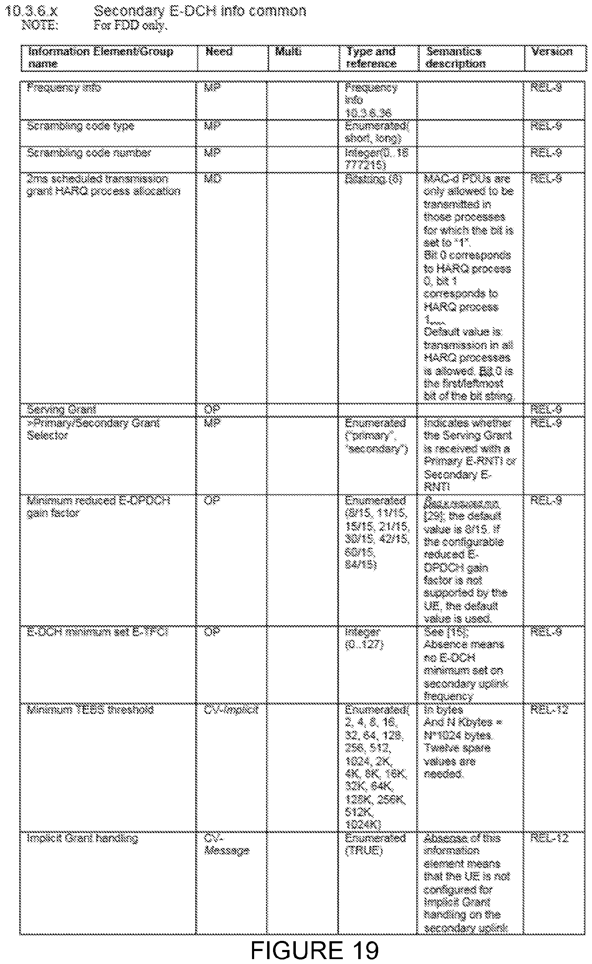

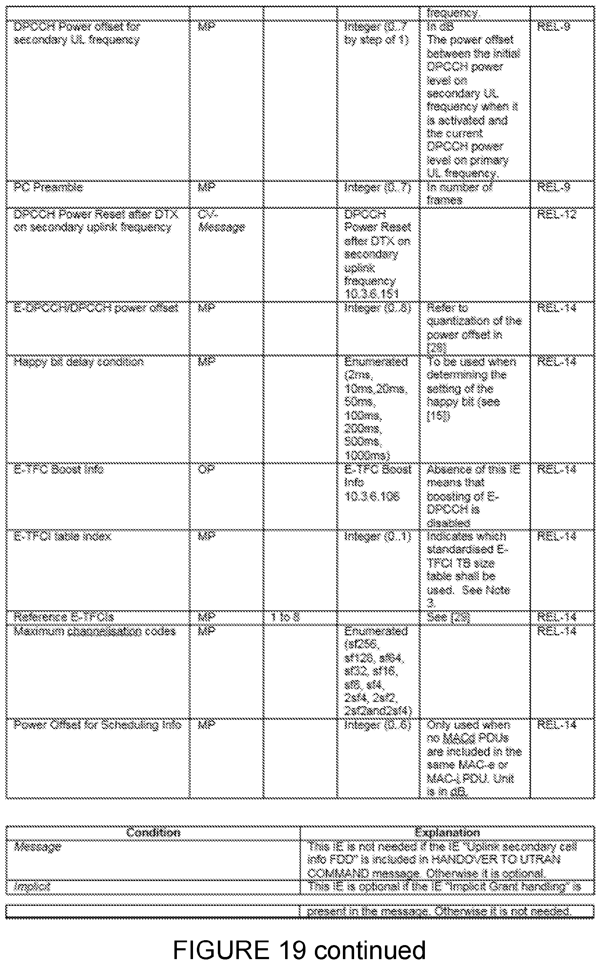

Figure 19 shows an exemplary "Secondary E-DCH info common" IE.

### Detailed Description

The following sets forth specific details, such as particular embodiments for purposes of explanation and not limitation. But it will be appreciated by one skilled in the art that other embodiments may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors, one or more processing units, one or more processing modules or one or more controllers, and the terms computer, processor, processing unit, processing module and controller may be employed interchangeably. When provided by a computer, processor, processing unit, processing module or controller, the functions may be provided by a single dedicated computer, processor, processing unit, processing module or controller, by a single shared computer, processor, processing unit, processing module or controller, or by a plurality of individual computers, processors, processing units, processing modules or controllers, some of which may be shared or distributed. Moreover, these terms also refer to other hardware capable of performing such functions and/or executing software, such as the example hardware recited above.

Although in the description below the term user equipment (UE) is used, it should be understood by the skilled in the art that "UE" is a non-limiting term comprising any mobile or wireless device or node equipped with a radio interface allowing for at least one of: transmitting signals in uplink (UL) and receiving and/or measuring signals in downlink (DL). A UE herein may comprise a UE (in its general sense) capable of operating or at least performing measurements in one or more frequencies, carrier frequencies, component carriers or frequency bands. It may be a "UE" operating in single- or multi-radio access technology (RAT) or multi-standard mode. As well as "UE", the terms "mobile device" and "terminal device" may be used interchangeably in the following description, and it will be appreciated that such a device does not necessarily have to be 'mobile' in the sense that it is carried by a user. Instead, the terms "mobile device" and "terminal device" encompass any device that is capable of communicating with communication networks that operate according to one or more mobile communication standards, such as the Global System for Mobile communications, GSM, UMTS, Long-Term Evolution, LTE, etc.

A cell is associated with a base station or radio base station (RBS), where a base station comprises in a general sense any network node transmitting radio signals in the downlink and/or receiving radio signals in the uplink. Some example base stations, or terms used for describing base stations, are eNodeB, eNB, Node B, macro/micro/pico/femto radio base station, home eNodeB (also known as femto base station), relay, repeater, sensor, transmitting-only radio nodes or receiving-only radio nodes. A base station may operate or at least perform measurements in one or more frequencies, carrier frequencies or frequency bands and may be capable of carrier aggregation. It may also be a single-radio access technology (RAT), multi-RAT, or multi-standard node, e.g., using the same or different base band modules for different RATs.

It should be noted that the term "radio access node" or "radio network node" as used herein refers to a network node, e.g. a base station, Node B or eNodeB, that communicates with a terminal device over an air interface, and the term "control node" can refer to a node in the radio access network (RAN) part of the communication network (e.g. in the case of an RNC in UTRAN) or a node in a core network part of the communication network (e.g. a mobility management entity, MME, or serving gateway, SGW in an LTE communication network).

Unless otherwise indicated herein, the signalling described is either via direct links or logical links (e.g. via higher layer protocols and/or via one or more network nodes).

Figure 9 illustrates an exemplary UMTS communication network, and in particular part of the UTRAN. The UTRAN comprises one or more control nodes in the form of radio network controllers (RNCs) 38 that each control a set of one or more radio base stations (Node Bs) 40. The RNC 38 controls the Node Bs 40 that are connected to it and manages radio resource allocation and mobility of terminal devices (UEs) 42 between Node Bs 40. The RNCs 38 also interface with the core network (not shown in Figure 9) and other RNCs 38. The Node Bs 40 provide the radio interface with the UEs 42.

Figure 10 shows a terminal device (UE) 42 that can be adapted or configured to operate according to one or more of the non-limiting examples described herein. The UE 42 comprises a processor or processing unit 50 that controls the operation of the UE 42. The processing unit 50 is connected to a transceiver unit 52 (which comprises a receiver and a transmitter) with associated antenna(s) 54 which are used to transmit signals to and receive signals from a radio access node 40 in the communication network. The transceiver unit 52 is configured to enable the UE 42 to operate in a multi carrier mode, i.e. to make use of two or more carriers to transmit data to the communication network. The UE 42 also comprises a memory or memory unit 56 that is connected to the processing unit 50 and that contains instructions or computer code executable by the processing unit 50 and other information or data required for the operation of the UE 42.

Figure 11 shows exemplary components of a radio access node or radio network node 40 (e.g. a Node B in UMTS) that can be used in one or more of the non-limiting examples described herein. The radio access node 40 comprises a processing unit 60 that controls the operation of the radio access node 40. The processing unit 60 is connected to transceiver circuitry 62 with one or more associated antenna(s) 64 which are used to transmit signals to, and receive signals from, terminal devices in the network over the air (i.e. over an air interface). The radio access node 40 also comprises a memory unit 66 that is connected to the processing unit 60 and that stores information and data required for the operation of the radio access node 40. The radio access node 40 also includes components and/or circuitry 68 for allowing the radio access node 40 to exchange information with a control node (e.g. an RNC, typically via the lub interface).

Figure 12 shows exemplary components of a control node 38 (e.g. an RNC in UMTS) that can be used in one or more of the embodiments described below. The control node 38 comprises a processing unit 70 that controls the operation of the control node 38. The processing unit 70 is connected to components and/or circuitry 72 for allowing the control node 38 to exchange information with the radio access node(s) 40 with which it is associated (which is typically via the lub interface), and components or circuitry 74 for allowing the control node 38 to exchange information with the core network. The control node 38 also comprises a memory module 76 that is connected to the processing module 40 and that stores information and data required for the operation of the control node 38.

It will be appreciated that, for simplicity, only components of the terminal device 42, the radio network node 40 and control node 38 required to illustrate the methods described below are shown in Figures 10, 11 and 12.

Although the embodiments of the present disclosure will mainly be described in the context of UTRAN (i.e. Node Bs and RNCs), it will be appreciated by those skilled in the art that the problems and solutions described herein are equally applicable to other types of wireless access networks and user equipments (UEs) implementing other access technologies and standards, and thus UTRAN (and the other UTRAN-specific terminology used herein) should only be seen as examples of the technologies to which the techniques can be applied. For example, those skilled in the art will appreciate that the techniques described herein can be applied to an evolved UTRAN (E-UTRAN) that is part of an LTE network.

An exemplary radio resource control (RRC) reconfiguration procedure is shown in Figure 13. When a radio connection is reconfigured, an RRC reconfiguration message is sent from the RNC 38 to the UE 42 (via a Node B 40). The RRC reconfiguration message may contain parameters for signalling radio bearers (SRBs), radio bearers (RBs), transport channels and physical channels. Some examples of RRC reconfiguration messages are Radio Bearer Reconfiguration, Radio Bearer Setup, Transport Channel Reconfiguration, Physical Channel Reconfiguration, Cell Update confirm, etc. Those skilled in the art will be aware of other examples. Once the UE 42 has been reconfigured according to the RRC reconfiguration message (e.g. by adding a transport channel, radio bearer, etc.), the UE 42 sends a message to the RNC 38 (via the Node B 40) indicating that the reconfiguration of the UE 42 is complete. This message can be an RRC Reconfiguration Complete message.

As noted above, it is an objective of current development work for Release 14 to enhance uplink multicarrier such that the uplink carriers can have different transmission time intervals (TTIs). In the following description, the uplink carriers are referred to as the first uplink carrier and second uplink carrier, as well as primary cell and secondary cell, and primary and secondary carrier.

Currently the secondary carrier is limited to the support of transport channels of type E-DCH and it is assumed to have the same E-DCH TTI as that of the primary carrier. The current RRC protocol framework does not allow the configuration of the secondary carrier with a different E-DCH TTI from that of the primary carrier. The techniques described herein provide ways to enable this configuration.

Figure 14 illustrates an exemplary method of operating a network node (e.g. an RNC 38 or Node B 40) in a communication network to configure a terminal device 42 for uplink multicarrier operation for transmissions from the terminal device 42 to a radio access node (e.g. a Node B) 40 in the communication network. The method comprises, in step 101, initiating the sending of a message to the terminal device to configure the terminal device to operate with a first uplink carrier having a first TTI and a second uplink carrier having a second TTI.

The message sent, or initiated to be sent, in step 101 can be an RRC message, such as an RRC Reconfiguration message.

Although not shown in3, after the message is sent, the network node 38, 40 can receive a message from the terminal device 42 indicating that reconfiguration of the terminal device in response to the configuration message is complete. This message can be, for example, an RRC Reconfiguration Complete message.

The network node can also receive data from the terminal device 42 via the first uplink carrier and the second uplink carrier once the reconfiguration is complete.

Figure 15 illustrates an exemplary method of operating a terminal device 42. The terminal device 42 is capable of uplink multicarrier operation with a communication network for transmissions from the terminal device 42 to a radio network node 40 in the communication network. This means that the terminal device 42 is capable of transmitting data to the network using two carriers. The method comprises, in step 111, receiving a message from the communication network, the message being for configuring the terminal device 42 to operate with a first uplink carrier having a first TTI and a second uplink carrier having a second TTI.

The message sent, or initiated to be sent, in step 101 can be an RRC message, such as an RRC Reconfiguration message.

Although not shown in Figure 14, after the message is sent, the terminal device 42 can send a message to the network indicating that reconfiguration of the terminal device 42 in response to the configuration message is complete. This message can be, for example, an RRC Reconfiguration Complete message.

The terminal device 42 can also transmit data to the network via the first uplink carrier and the second uplink carrier once the reconfiguration is complete.

Various examples of the message sent, or initiated to be sent, in step 101, and received in step 111, are described in more detail below with reference to Figures 16-19.

In a first approach, a second transport channel is created that has a different E-DCH TTI. This would mean the UE 42 is configured with one E-DCH transport channel with one TTI on the primary carrier and a second E-DCH transport channel with a different TTI on the secondary carrier. Thus the message in steps 101/111 can configure the terminal device 42 with a first transport channel (e.g. E-DCH) having the first TTI for the first uplink carrier and a second transport channel (e.g. E-DCH) having the second TTI for the second uplink carrier.

In some examples the first TTI is 2ms and the second TTI is 10ms. In other examples, the first TTI is 10ms and the second TTI is 2ms. In yet other examples, the first TTI and/or second TTI can be other values (i.e. values other than 2ms and/or 10ms).

This first approach can fit into the current protocol framework through the addition of another entry for a new E-DCH in the list of UL transport channels in the IE "Added or Reconfigured TrCH information list" shown in Figure 2. Thus the transport channel list can identify the first transport channel and the second transport channel. With this example, it would also be necessary to remove duplicated parameters in the IE "Uplink secondary cell info FDD" (e.g. as shown in Figure 6).

This approach also means that the user data stream (i.e., the logical channel) will need to be split before data is handed down to the two transport channels. Currently, this functionality is handled within the transport layer. Higher layers just hand the data over to a single E-DCH transport channel, which is responsible for the distribution over the two UL carriers. Therefore, this approach requires the functionality for carrier distribution of data to be performed in two different layers.

In a second approach, the message framework can be expanded to accommodate different TTI lengths within the same transport channel (e.g. within the same E-DCH). Thus the message can configure the terminal device 42 with a single transport channel for the first uplink carrier and the second uplink carrier, with the single transport channel having the first TTI and the second TTI. There are several ways that this can be achieved.

In the current framework the E-DCH is specified in an RRC Reconfiguration message in different places. Transport-layer parameters such as TTI length, HARQ (hybrid automatic repeat request) info, etc., are given as part of the IE "Added or Reconfigured UL TrCH information" (e.g. as shown in Figure 2), physical-layer-related resource parameters are given in the lEs "E-DCH Info" and "Uplink secondary cell info FDD" (shown in Figures 3 and 6 respectively), where the former holds parameters that are common to both carriers and the latter the ones that are specific to the secondary carrier.

The first way in which this second approach can be implemented is to add all the E-DCH-TTI-specific parameters for the secondary carrier to the IE "Uplink secondary cell info FDD", overriding similar parameters in the "E-DCH Info" IE when necessary. Thus the message in step 101/111 can comprise an "Uplink secondary cell info FDD" information element, IE, that indicates parameters that are specific to the TTI of the second uplink carrier.

A second way in which the second approach can be implemented keeps the current logical structure of the parameters within the message. This requires the creation of new parameters for the new E-DCH TTI at the appropriate levels whenever appropriate. Thus the message in step 101/111 can comprise a first IE that indicates the first TTI for the first uplink carrier and a second IE that indicates the second TTI for the second uplink carrier. At the message level, this involves adding new transport channel parameters, e.g., "E-DCH Transmission Time Interval for secondary carrier" and for the lower layer UL radio resource parameters, adding a new IE for E-DCH Info for secondary UL frequency as well as modifying the existing IE "Uplink secondary cell info FDD" to remove any duplicated or no longer needed parameters. An example of the implementation of this approach is shown in Figures 16 and 17.

Thus the "E-DCH Info" is effectively decoupled and a separate IE e.g. called "E-DCH Info for secondary carrier" or similar is implemented alongside the existing E-DCH. An example of this new IE group is shown in Figure 16. This new IE "E-DCH Info for secondary carrier" may contain the same IEs as the current "E-DCH Info" (as shown in Figure 3) or very similar. This new "E-DCH Info for secondary carrier" in Figure 16 needs to be referenced somewhere in the RRC message, and as an example it may be included in a modified "Uplink secondary cell info FDD" as shown in Figure 17 (in particular the new "E-DCH Info for secondary carrier" IE). Thus, in this example, in the message in step 101/111 the second IE indicating the TTI for the second uplink carrier is part of a separate group of lEs to the first IE that indicates the second TTI for the second carrier. For example the message can comprise an "E-DCH Info" IE for the second carrier that indicates parameters that are specific to the TTI of the second uplink carrier. Alternatively, as described further below, the first IE and the second IE can be part of the same group of IEs, e.g. an "Added or Reconfigured UL TrCH information" group of IEs, and the parameters that are specific to the second uplink carrier can be indicated in a separate group of IEs.

As an alternative, instead of reusing the whole "E-DCH Info" as in Figure 16, it is possible to select the IEs that are necessary to configure the terminal device 42 for the second uplink carrier and include them in a suitable place in the message in step 101/111. Those lEs are currently part of "E-DPCCH info" IE and "E-DPDCH info" IE included in "E-DCH Info", as shown in Figures 4, 5 and 3 respectively. A suitable place to include these IEs could be, for example, the existing IE "Secondary E-DCH info common", the current version of which is shown in Figure 8. A modified version of the "Secondary E-DCH info common" IE that includes the required information is shown in Figure 19. As an alternative, the IEs may instead be included in a new group alongside the "Secondary E-DCH info common" IE, for example "Secondary E-DCH info common 2". The new IE then needs to be referenced somewhere in the message, e.g. in "Uplink secondary cell info FDD" as shown in Figure 17. In addition, a new IE for the TTI length for the second uplink carrier is added to the "Added or Reconfigured UL TrCh Information" IE, as shown in Figure 18, but it may be added somewhere else in the message also, e.g. as part of the "Uplink secondary cell info FDD" IE.

Thus, the above examples enable the configuration of a terminal device for multicarrier operation in an efficient and clear way.

The present invention is defined in the appended independent claims. Several implementation details of the invention are defined in the dependent claims.

## Claims

1. A method of operating a network node in a communication network to configure a terminal device for uplink multicarrier operation for transmissions from the terminal device to a radio access node in the communication network, wherein the communication network is a Universal Mobile Telecommunications System, UMTS, communication network and the uplink multicarrier operation is dual-carrier high speed uplink packet access, DC-HSUPA, or dual-band dual-carrier high speed uplink packet access, DB-DC-HSUPA, the method comprising:
initiating (101) the sending of a message to the terminal device to configure the terminal device to operate with a first uplink carrier having a first transmission time interval, TTI, and a second uplink carrier having a second TTI, wherein the message configures the terminal device with a single transport channel for the first uplink carrier and the second uplink carrier, wherein the single transport channel has the first TTI and the second TTI, wherein the message comprises an "Uplink secondary cell info FDD" information element, IE, that indicates parameters that are specific to the TTI of the second uplink carrier.

2. A method as defined in claim 1, wherein the message is a Radio Resource Control, RRC, message.

3. A method as defined in claim 1 or 2, wherein the message is a RRC reconfiguration message.

4. A method as defined in any of claims 1-3, wherein the method further comprises receiving a message from the terminal device indicating that reconfiguration of the terminal device in response to the configuration message is complete.

5. A method as defined in any of claims 1-4, wherein the method further comprises receiving data from the terminal device via the first uplink carrier and the second uplink carrier.

6. A network node (38; 40) for use in a communication network, the network node (38; 40) being for configuring a terminal device (42) for uplink multicarrier operation for transmissions from the terminal device (42) to a radio access node (40) in the communication network, wherein the communication network is a Universal Mobile Telecommunications System, UMTS, communication network and the uplink multicarrier operation is dual-carrier high speed uplink packet access, DC-HSUPA, or dual-band dual-carrier high speed uplink packet access, DB-DC-HSUPA, the network node (38; 40) being adapted to:
initiate the sending of a message to the terminal device (42) to configure the terminal device (42) to operate with a first uplink carrier having a first transmission time interval, TTI, and a second uplink carrier having a second TTI, wherein the message configures the terminal device (42) with a single transport channel for the first uplink carrier and the second uplink carrier, wherein the single transport channel has the first TTI and the second TTI, wherein the message comprises an "Uplink secondary cell info FDD" information element, IE, that indicates parameters that are specific to the TTI of the second uplink carrier.

7. A network node (38; 40) as defined in claim 6, wherein the message is a Radio Resource Control, RRC, message.

8. A network node (38; 40) as defined in claim 6 or 7, wherein the message is a RRC reconfiguration message.

9. A network node (38; 40) as defined in any of claims 6-8, wherein the network node (38; 40) is further adapted to receive a message from the terminal device (42) indicating that reconfiguration of the terminal device (42) in response to the configuration message is complete.

10. A network node (38; 40) as defined in any of claims 6-9, wherein the network node (38; 40) is further adapted to receive data from the terminal device (42) via the first uplink carrier and the second uplink carrier.

11. A method of operating a terminal device, wherein the terminal device is capable of uplink multicarrier operation with a communication network for transmissions from the terminal device to a radio network node in the communication network, wherein the communication network is a Universal Mobile Telecommunications System, UMTS, communication network and the uplink multicarrier operation is dual-carrier high speed uplink packet access, DC-HSUPA, or dual-band dual-carrier high speed uplink packet access, DB-DC-HSUPA, the method comprising:
receiving (111) a message from the communication network, the message being for configuring the terminal device to operate with a first uplink carrier having a first transmission time interval, TTI, and a second uplink carrier having a second TTI, wherein the message is for configuring the terminal device with a single transport channel for the first uplink carrier and the second uplink carrier, wherein the single transport channel has the first TTI and the second TTI, wherein the message comprises an "Uplink secondary cell info FDD" information element, IE, that indicates parameters that are specific to the TTI of the second uplink carrier.

12. A method as defined in claim 11, wherein the message is a Radio Resource Control, RRC, message.

13. A method as defined in claim 11 or 12, wherein the message is a RRC reconfiguration message.

14. A method as defined in any of claims 11-13, wherein the method further comprises sending a message to the communication network indicating that reconfiguration of the terminal device in response to the configuration message is complete.

15. A method as defined in any of claims 11-14, wherein the method further comprises transmitting data from the terminal device via the first uplink carrier and the second uplink carrier.

16. A terminal device (42), wherein the terminal device (42) is capable of uplink multicarrier operation with a communication network for transmissions from the terminal device (42) to a radio network node (40) in the communication network, wherein the communication network is a Universal Mobile Telecommunications System, UMTS, communication network and the uplink multicarrier operation is dual-carrier high speed uplink packet access, DC-HSUPA, or dual-band dual-carrier high speed uplink packet access, DB-DC-HSUPA, the terminal device (42) being adapted to receive a message from the communication network, the message being for configuring the terminal device (42) to operate with a first uplink carrier having a first transmission time interval, TTI, and a second uplink carrier having a second TTI, wherein the message is for configuring the terminal device (42) with a single transport channel for the first uplink carrier and the second uplink carrier, wherein the single transport channel has the first TTI and the second TTI, wherein the message comprises an "Uplink secondary cell info FDD" information element, IE, that indicates parameters that are specific to the TTI of the second uplink carrier.

17. A terminal device (42) as defined in claim 16, wherein the message is a Radio Resource Control, RRC, message.

18. A terminal device (42) as defined in claim 16 or 17, wherein the message is a RRC reconfiguration message.

19. A terminal device (42) as defined in any of claims 16-18, wherein the terminal device (42) is further adapted to send a message to the communication network indicating that reconfiguration of the terminal device (42) in response to the configuration message is complete.

20. A terminal device (42) as defined in any of claims 16-19, wherein the terminal device (42) is further adapted to transmit data from the terminal device (42) via the first uplink carrier and the second uplink carrier.

21. A computer program product comprising a computer readable medium having computer readable code embodied therein, the computer readable code being configured such that, on execution by a suitable computer or processor, the computer or processor is caused to perform the method of any of claims 1-5 or 11-15.

## Patentansprüche

1. Verfahren zum Betreiben eines Netzwerkknotens in einem Kommunikationsnetzwerk, um eine Endgerätvorrichtung für Aufwärtsverbindungs-Mehrträgerbetrieb für Übertragungen von der Endgerätvorrichtung an einen Funkzugriffsknoten in dem Kommunikationsnetzwerk zu konfigurieren, wobei das Kommunikationsnetzwerk ein UMTS-Kommunikationsnetzwerk, Universelles Mobil-Kommunikationssystem-Kommunikationsnetzwerk, und der Aufwärtsverbindungs-Mehrträgerbetrieb ein Zweifachträger-Hochgeschwindigkeits-Aufwärtsverbindungpaketzugang, DC-HSUPA, oder ein Zweifachband-Zweifachträger-Hochgeschwindigkeits-Aufwärtsverbindungpaketzugang, DB-DC-HSUPA, ist, wobei das Verfahren umfasst:
Initiieren (101) des Sendens einer Nachricht an die Endgerätvorrichtung, um die Endgerätvorrichtung zu konfigurieren, um mit einem ersten Aufwärtsverbindungsträger betrieben zu werden, der ein erstes Übertragungszeitintervall, TTI, aufweist, und mit einem zweiten Aufwärtsverbindungsträger, der ein zweites TTI aufweist, wobei die Nachricht die Endgerätvorrichtung mit einem einzigen Transportkanal für den ersten Aufwärtsverbindungsträger und den zweiten Aufwärtsverbindungsträger konfiguriert, wobei der einzige Transportkanal das erste TTI und das zweite TTI aufweist, wobei die Nachricht ein Informationselement, IE, "Aufwärtsverbindungs-Sekundärzelleninfo-FDD", umfasst, das Parameter anzeigt, die für das TTI des zweiten Aufwärtsverbindungsträgers spezifisch sind.

2. Verfahren nach Anspruch 1, wobei die Nachricht eine Funkressourcensteuerungsnachricht, RRC-Nachricht, ist.

3. Verfahren nach Anspruch 1 oder 2, wobei die Nachricht eine RRC-Rekonfigurationsnachricht ist.

4. Verfahren nach einem der Ansprüche 1 - 3, wobei das Verfahren weiter Empfangen einer Nachricht von der Endgerätvorrichtung umfasst, die anzeigt, dass die Rekonfiguration der Endgerätvorrichtung als Reaktion auf die Konfigurationsnachricht abgeschlossen ist.

5. Verfahren nach einem der Ansprüche 1 - 4, wobei das Verfahren weiter Empfangen von Daten von der Endgerätvorrichtung über den ersten Aufwärtsverbindungsträger und den zweiten Aufwärtsverbindungsträger umfasst.

6. Netzwerkknoten (38; 40) zu Verwendung in einem Kommunikationsnetzwerk, wobei der Netzwerkknoten (38; 40) dazu dient, eine Endgerätvorrichtung (42) für Aufwärtsverbindungs-Mehrträgerbetrieb für Übertragungen von der Endgerätvorrichtung (42) an einen Funkzugriffsknoten (40) in dem Kommunikationsnetzwerk zu konfigurieren, wobei das Kommunikationsnetzwerk ein UMTS-Kommunikationsnetzwerk, Universelles Mobil-Kommunikationssystem-Kommunikationsnetzwerk, ist und der Aufwärtsverbindungs-Mehrträgerbetrieb ein Zweifachträger-Hochgeschwindigkeits-Aufwärtsverbindungpaketzugang, DC-HSUPA, oder ein Zweifachband-Zweifachträger-Hochgeschwindigkeits-Aufwärtsverbindungpaketzugang, DB-DC-HSUPA, ist, wobei der Netzwerkknoten (38; 40) ausgelegt ist zum:
Initiieren des Sendens einer Nachricht an die Endgerätvorrichtung (42), um die Endgerätvorrichtung (42) zu konfigurieren, um mit einem ersten Aufwärtsverbindungsträger betrieben zu werden, der ein erstes Übertragungszeitintervall, TTI, aufweist, und mit einem zweiten Aufwärtsverbindungsträger, der ein zweites TTI aufweist, wobei die Nachricht die Endgerätvorrichtung (42) mit einem einzigen Transportkanal für den ersten Aufwärtsverbindungsträger und den zweiten Aufwärtsverbindungsträger konfiguriert, wobei der einzige Transportkanal das erste TTI und das zweite TTI aufweist, wobei die Nachricht ein Informationselement, IE, "Aufwärtsverbindungs-Sekundärzelleninfo-FDD", umfasst, das Parameter anzeigt, die für das TTI des zweiten Aufwärtsverbindungsträgers spezifisch sind.

7. Netzwerkknoten (38; 40) nach Anspruch 6, wobei die Nachricht eine Funkressourcensteuerungsnachricht, RRC-Nachricht, ist.

8. Netzwerkknoten (38; 40) nach Anspruch 6 oder 7, wobei die Nachricht eine RRC-Rekonfigurationsnachricht ist.

9. Netzwerkknoten (38; 40) nach einem der Ansprüche 6 - 8, wobei der Netzwerkknoten (38; 40) weiter angepasst ist, um eine Nachricht von der Endgerätvorrichtung (42) zu empfangen, die anzeigt, dass die Rekonfiguration der Endgerätvorrichtung (42) als Reaktion auf die Konfigurationsnachricht abgeschlossen ist.

10. Netzwerkknoten (38; 40) nach einem der Ansprüche 6 - 9, wobei der Netzwerkknoten (38; 40) weiter angepasst ist, um Daten von der Endgerätvorrichtung (42) über den ersten Aufwärtsverbindungsträger und den zweiten Aufwärtsverbindungsträger zu empfangen.

11. Verfahren zum Betreiben einer Endgerätvorrichtung, wobei die Endgerätvorrichtung zu Aufwärtsverbindungs-Mehrträgerbetrieb mit einem Kommunikationsnetzwerk für Übertragungen von der Endgerätvorrichtung an einen Funknetzwerkknoten in dem Kommunikationsnetzwerk fähig ist, wobei das Kommunikationsnetzwerk ein UMTS-Kommunikationsnetzwerk, Universelles Mobil-Kommunikationssystem-Kommunikationsnetzwerk, ist und der Aufwärtsverbindungs-Mehrträgerbetrieb Zweifachträger-Hochgeschwindigkeits-Aufwärtsverbindungpaketzugang, DC-HSUPA, oder Zweifachband-Zweifachträger-Hochgeschwindigkeits-Aufwärtsverbindungpaketzugang, DB-DC-HSUPA, ist, wobei das Verfahren umfasst:
Empfangen (111) einer Nachricht von dem Kommunikationsnetzwerk, wobei die Nachricht dazu dient, die Endgerätvorrichtung zu konfigurieren, um mit einem ersten Aufwärtsverbindungsträger betrieben zu werden, der ein erstes Übertragungszeitintervall, TTI, aufweist, und mit einem zweiten Aufwärtsverbindungsträger, der ein zweites TTI, aufweist, wobei die Nachricht dazu dient, das Endgerätvorrichtung mit einem einzigen Transportkanal für den ersten Aufwärtsverbindungsträger und den zweiten Aufwärtsverbindungsträger zu konfigurieren, wobei der einzige Transportkanal das erste TTI und das zweite TTI aufweist, wobei die Nachricht ein Informationselement, IE, "Aufwärtsverbindungs-Sekundärzelleninfo-FDD", umfasst, das Parameter anzeigt, die für das TTI des zweiten Aufwärtsverbindungsträgers spezifisch sind.

12. Verfahren nach Anspruch 11, wobei die Nachricht eine Funkressourcensteuerungsnachricht, RRC-Nachricht, ist.

13. Verfahren nach Anspruch 11 oder 12, wobei die Nachricht eine RRC-Rekonfigurationsnachricht ist.

14. Verfahren nach einem der Ansprüche 11 - 13, wobei das Verfahren weiter Senden einer Nachricht an das Kommunikationsnetzwerk umfasst, die anzeigt, dass die Rekonfiguration der Endgerätvorrichtung als Reaktion auf die Konfigurationsnachricht abgeschlossen ist.

15. Verfahren nach einem der Ansprüche 11 - 14, wobei das Verfahren weiter Übertragen von Daten von der Endgerätvorrichtung über den ersten Aufwärtsverbindungsträger und den zweiten Aufwärtsverbindungsträger umfasst.

16. Endgerätvorrichtung (42), wobei die Endgerätvorrichtung (42) zu Aufwärtsverbindungs-Mehrträgerbetrieb mit einem Kommunikationsnetzwerk für Übertragungen von dem Endgerätvorrichtung (42) an einen Funknetzwerkknoten (40) in dem Kommunikationsnetzwerk fähig ist, wobei das Kommunikationsnetzwerk ein UMTS-Kommunikationsnetzwerk, Universelles Mobil-Kommunikationssystem-Kommunikationsnetzwerk, ist und der Aufwärtsverbindungs-Mehrträgerbetrieb Zweifachträger-Hochgeschwindigkeits-Aufwärtsverbindungpaketzugang, DC-HSUPA, oder Zweifachband-Zweifachträger-Hochgeschwindigkeits-Aufwärtsverbindungpaketzugang, DB-DC-HSUPA, ist, wobei die Endgerätvorrichtung (42) angepasst ist, um eine Nachricht von dem Kommunikationsnetzwerk zu empfangen, wobei die Nachricht dazu dient, die Endgerätvorrichtung (42) zu konfigurieren, um mit einem ersten Aufwärtsverbindungsträger betrieben zu werden, der ein erstes Übertragungszeitintervall, TTI, aufweist, und mit einem zweiten Aufwärtsverbindungsträger, der ein zweites TTI, aufweist, wobei die Nachricht dazu dient, das Endgerätvorrichtung (42) mit einem einzigen Transportkanal für den ersten Aufwärtsverbindungsträger und den zweiten Aufwärtsverbindungsträger zu konfigurieren, wobei der einzige Transportkanal das erste TTI und das zweite TTI aufweist, wobei die Nachricht ein Informationselement, IE, "Aufwärtsverbindungs-Sekundärzelleninfo-FDD", umfasst, das Parameter anzeigt, die für das TTI des zweiten Aufwärtsverbindungsträgers spezifisch sind.

17. Endgerätvorrichtung (42) nach Anspruch 16, wobei die Nachricht eine Funkressourcensteuerungsnachricht, RRC-Nachricht, ist.

18. A Endgerätvorrichtung (42) nach Anspruch 16 oder 17, wobei die Nachricht eine RRC-Rekonfigurationsnachricht ist.

19. Endgerätvorrichtung (42) nach einem der Ansprüche 16 - 18, wobei die Endgerätvorrichtung (42) weiter angepasst ist, um eine Nachricht an das Kommunikationsnetzwerk zu senden, die anzeigt, dass die Rekonfiguration der Endgerätvorrichtung (42) als Reaktion auf die Konfigurationsnachricht abgeschlossen ist.

20. Endgerätvorrichtung (42) nach einem der Ansprüche 16 -19, wobei die Endgerätvorrichtung (42) weiter angepasst ist, um Daten von der Endgerätvorrichtung (42) über den ersten Aufwärtsverbindungsträger und den zweiten Aufwärtsverbindungsträger zu senden.

21. Computerprogramprodukt, umfassend ein computerlesbares Medium, das computerlesbaren Code darauf verkörpert aufweist, wobei der computerlesbare Code so konfiguriert ist, dass bei Ausführung durch einen geeigneten Computer oder Prozessor verursacht wird, dass der Computer oder Prozessor das Verfahren nach einem der Ansprüche 1 - 5 oder 11 - 15 durchführt.

## Revendications

1. Procédé de fonctionnement d'un nœud de réseau dans un réseau de communication pour configurer un dispositif terminal pour un fonctionnement à porteuses multiples de liaison montante pour des transmissions du dispositif terminal à un nœud d'accès radio dans le réseau de communication, dans lequel le réseau de communication est un réseau de communication de système universel de communications mobiles, UMTS, et le fonctionnement à porteuses multiples de liaison montante est un accès par paquets en liaison montante haut débit à double porteuse, DC-HSUPA, ou un accès par paquets en liaison montante haut débit à double porteuse et double bande, DB-DC-HSUPA, le procédé comprenant :
le lancement (101) de l'envoi d'un message au dispositif terminal pour configurer le dispositif terminal pour fonctionner avec une première porteuse de liaison montante ayant un premier intervalle de temps de transmission, TTI, et une seconde porteuse de liaison montante ayant un second TTI, dans lequel le message configure le dispositif terminal avec un unique canal de transport pour la première porteuse de liaison montante et la seconde porteuse de liaison montante, dans lequel l'unique canal de transport a le premier TTI et le second TTI, dans lequel le message comprend un élément d'information, IE, «information de cellule secondaire de liaison montante FDD » qui indique des paramètres qui sont spécifiques au TTI de la seconde porteuse de liaison montante.

2. Procédé selon la revendication 1, dans lequel le message est un message de commande de ressource radio, RRC.

3. Procédé selon la revendication 1 ou 2, dans lequel le message est un message de reconfiguration RRC.

4. Procédé selon l'une quelconque des revendications 1 à 3, dans lequel le procédé comprend en outre la réception d'un message à partir du dispositif terminal indiquant qu'une reconfiguration du dispositif terminal en réponse au message de configuration est achevée.

5. Procédé selon l'une quelconque des revendications 1 à 4, dans lequel le procédé comprend en outre la réception de données à partir du dispositif terminal via la première porteuse de liaison montante et la seconde porteuse de liaison montante.

6. Nœud de réseau (38 ; 40) pour l'utilisation dans un réseau de communication, le nœud de réseau (38 ; 40) étant destiné à configurer un dispositif terminal (42) pour un fonctionnement à porteuses multiples de liaison montante pour des transmissions du dispositif terminal (42) à un nœud d'accès radio (40) dans le réseau de communication, dans lequel le réseau de communication est un réseau de communication de système universel de communications mobiles, UMTS, et le fonctionnement à porteuses multiples de liaison montante est un accès par paquets en liaison montante haut débit à double porteuse, DC-HSUPA, ou un accès par paquets en liaison montante haut débit à double porteuse et double bande, DB-DC-HSUPA, le nœud de réseau (38 ; 40) étant adapté pour :
lancer l'envoi d'un message au dispositif terminal (42) pour configurer le dispositif terminal (42) pour fonctionner avec une première porteuse de liaison montante ayant un premier intervalle de temps de transmission, TTI, et une seconde porteuse de liaison montante ayant un second TTI, dans lequel le message configure le dispositif terminal (42) avec un unique canal de transport pour la première porteuse de liaison montante et la seconde porteuse de liaison montante, dans lequel l'unique canal de transport a le premier TTI et le second TTI, dans lequel le message comprend un élément d'information, IE, «information de cellule secondaire de liaison montante FDD » qui indique des paramètres qui sont spécifiques au TTI de la seconde porteuse de liaison montante.

7. Nœud de réseau (38 ; 40) selon la revendication 6, dans lequel le message est un message de commande de ressource radio, RRC.

8. Nœud de réseau (38 ; 40) selon la revendication 6 ou 7, dans lequel le message est un message de reconfiguration RRC.

9. Nœud de réseau (38 ; 40) selon l'une quelconque des revendications 6 à 8, dans lequel le nœud de réseau (38 ; 40) est adapté en outre pour recevoir un message à partir du dispositif terminal (42) indiquant qu'une reconfiguration du dispositif terminal (42) en réponse au message de configuration est achevée.

10. Nœud de réseau (38 ; 40) selon l'une quelconque des revendications 6 à 9, dans lequel le nœud de réseau (38 ; 40) est adapté en outre pour recevoir des données à partir du dispositif terminal (42) via la première porteuse de liaison montante et la seconde porteuse de liaison montante.

11. Procédé de fonctionnement d'un dispositif terminal, dans lequel le dispositif terminal est adapté pour un fonctionnement à porteuses multiples de liaison montante avec un réseau de communication pour des transmissions du dispositif terminal à un nœud de réseau radio dans le réseau de communication, dans lequel le réseau de communication est un réseau de communication de système universel de communications mobiles, UMTS, et le fonctionnement à porteuses multiples de liaison montante est un accès par paquets en liaison montante haut débit à double porteuse, DC-HSUPA, ou un accès par paquets en liaison montante haut débit à double porteuse et double bande, DB-DC-HSUPA, le procédé comprenant :
la réception (111) d'un message à partir du réseau de communication, le message étant destiné à configurer le dispositif terminal pour fonctionner avec une première porteuse de liaison montante ayant un premier intervalle de temps de transmission, TTI, et une seconde porteuse de liaison montante ayant un second TTI, dans lequel le message configure le dispositif terminal avec un unique canal de transport pour la première porteuse de liaison montante et la seconde porteuse de liaison montante, dans lequel l'unique canal de transport a le premier TTI et le second TTI, dans lequel le message comprend un élément d'information, IE, «information de cellule secondaire de liaison montante FDD » qui indique des paramètres qui sont spécifiques au TTI de la seconde porteuse de liaison montante.

12. Procédé selon la revendication 11, dans lequel le message est un message de commande de ressource radio, RRC.

13. Procédé selon la revendication 11 ou 12, dans lequel le message est un message de reconfiguration RRC.

14. Procédé selon l'une quelconque des revendications 11 à 13, dans lequel le procédé comprend en outre l'envoi d'un message au réseau de communication indiquant qu'une reconfiguration du dispositif terminal en réponse au message de configuration est achevée.

15. Procédé selon l'une quelconque des revendications 11 à 14, dans lequel le procédé comprend en outre la transmission de données à partir du dispositif terminal via la première porteuse de liaison montante et la seconde porteuse de liaison montante.

16. Dispositif terminal (42), dans lequel le dispositif terminal (42) est adapté pour un fonctionnement à porteuses multiples de liaison montante avec un réseau de communication pour des transmissions du dispositif terminal (42) à un nœud de réseau radio (40) dans le réseau de communication, dans lequel le réseau de communication est un réseau de communication de système universel de communications mobiles, UMTS, et le fonctionnement à porteuses multiples de liaison montante est un accès par paquets en liaison montante haut débit à double porteuse, DC-HSUPA, ou un accès par paquets en liaison montante haut débit à double porteuse et double bande, DB-DC-HSUPA, le dispositif terminal (42) étant adapté pour recevoir un message à partir du réseau de communication, le message étant destiné à configurer le dispositif terminal (42) pour fonctionner avec une première porteuse de liaison montante ayant un premier intervalle de temps de transmission, TTI, et une seconde porteuse de liaison montante ayant un second TTI, dans lequel le message configure le dispositif terminal (42) avec un unique canal de transport pour la première porteuse de liaison montante et la seconde porteuse de liaison montante, dans lequel l'unique canal de transport a le premier TTI et le second TTI, dans lequel le message comprend un élément d'information, IE, «information de cellule secondaire de liaison montante FDD » qui indique des paramètres qui sont spécifiques au TTI de la seconde porteuse de liaison montante.

17. Dispositif terminal (42) selon la revendication 16, dans lequel le message est un message de commande de ressource radio, RRC.

18. Dispositif terminal (42) selon la revendication 16 ou 17, dans lequel le message est un message de reconfiguration RRC.

19. Dispositif terminal (42) selon l'une quelconque des revendications 16 à 18, dans lequel le dispositif terminal (42) est adapté en outre pour envoyer un message au réseau de communication indiquant qu'une reconfiguration du dispositif terminal (42) en réponse au message de configuration est achevée.

20. Dispositif terminal (42) selon l'une quelconque des revendications 16 à 19, dans lequel le dispositif terminal (42) est adapté en outre pour transmettre des données à partir du dispositif terminal (42) via la première porteuse de liaison montante et la seconde porteuse de liaison montante.

21. Produit de programme informatique comprenant un support lisible par ordinateur ayant un code lisible par ordinateur incorporé dedans, le code lisible par ordinateur étant configuré de manière que, lors de l'exécution par un ordinateur ou processeur approprié, l'ordinateur ou le processeur est amené à effectuer le procédé selon l'une quelconque des revendications 1 à 5 ou 11 à 15.
